# EUROPÄISCHE PATENTSCHRIFT

(11) **EP 3 717 853 B1**
(45) Veröffentlichungstag und Bekanntmachung des Hinweises auf die Patenterteilung: **29.09.2021**
(21) Anmeldenummer: 18814823.3
(22) Anmeldetag: 29.11.2018
(51) Int. Cl.: F27D 9/00, C21D 11/00, C21D 1/00, C21D 8/02, C21D 8/04, C21D 9/00, C21D 9/46

(54) **TEMPERIEREINHEIT UND TEMPERIERVERFAHREN FÜR EINE OFENVORRICHTUNG ZUM WÄRMEBEHANDELN EINER PLATINE**
TEMPERING UNIT AND TEMPERING METHOD FOR A FURNACE FOR THE HEAT TREATMENT OF A PLATE
DISPOSITIF DE REVENU ET MÉTHODE DE REVENU POUR UN FOUR DESTINÉ AU TRAITEMENT THERMIQUE D'UNE TÔLE

(30) Priorität: 01.12.2017 DE 102017128574
(43) Veröffentlichungstag der Anmeldung: 07.10.2020
(73) Patentinhaber: EBNER Industrieofenbau GmbH, 4060 Leonding (AT)
(72) Erfinder: EBNER, Robert, 4060 Leonding (AT); SAUSCHLAGER, Andreas, 4060 Leonding (AT); OPPERMANN, Anton, 4400 Steyr (AT); SCHATZ, Daniel, 4481 Asten (AT); KIRSCHNER, Günter, 4050 Traun (AT); HEITZMANN, Lukas, 4050 Traun (AT); HUMER, Harald, 4020 Linz (AT); MUSIC, Mustafa, 4600 Wels (AT)
(74) Vertreter: Ofner, Clemens
(86) Internationale Anmeldenummer: PCT/EP2018/082994
(87) Internationale Veröffentlichungsnummer: WO 2019/106083

(56) Entgegenhaltungen:
- EP-A1- 2 336 374
- CN-A- 104 087 725
- DE-A1-102015 113 407

## Beschreibung

### Technisches Gebiet

Die vorliegende Erfindung betrifft eine Temperiereinheit für eine Ofenvorrichtung zum Wärmebehandeln einer Platine. Ferner betrifft die vorliegende Erfindung ein Temperiersystem mit zumindest zwei Temperiereinheiten sowie ein Verfahren zum Betreiben einer Temperiereinheit.

### Hintergrund der Erfindung

Bei der Herstellung von Metallbauteilen sind immer höhere Anforderungen an die exakte Einstellbarkeit einzelner Gefügebereiche und entsprechenden Bereiche mit gewünschter Festigkeit gegeben. Im Karosseriebau für Kraftfahrzeuge werden beispielsweise Bauteile bevorzugt, welche ein geringes Gewicht bei gleichzeitig gewünschter Festigkeit und gewünschtem Verformungsverhalten aufweisen. In Bereichen der Karosserie, die im Fall eines Crashs besonders hohen Belastungen ausgesetzt sein kann, werden pressgehärtete Bauteile eingesetzt, die aus hochfesten Stählen erzeugt sind und unterschiedliche duktile Bereiche aufweisen. Als Beispiele für solche Bauteile sind die A- und B-Säule, die Stoßstange und Türaufprallträger eines Kraftfahrzeugs zu nennen.

Bauteile mit unterschiedlichen duktilen Bereichen werden beispielsweise hergestellt, indem Metallplatinen Bereiche aufweisen, welche unterschiedlich wärmebehandelt werden. Diese unterschiedliche Wärmebehandlung unterschiedlicher Bereiche der Metallplatinen wird beispielsweise mittels einer gezielten Einstellung von unterschiedlichen Temperatur- bzw. Abkühlprofilen gesteuert.

DE102015113407 offenbart eine Vorrichtung und ein Verfahren zum Temperieren einer Platine. DE102015113407 offenbart jedoch nicht die Möglichkeit einer präzisen lokalen Temperierung nur auf einem bestimmten Bereich der Platine.

### Darstellung der Erfindung

Es ist eine Aufgabe der vorliegenden Erfindung, eine Vorrichtung zum exakten Einstellen von Gefügebereichen einer Platine bereitzustellen.

Diese Aufgabe wird mit einer Temperiereinheit für eine Ofenvorrichtung zum Wärmebehandeln einer Platine, einem Temperiersystem sowie einem Verfahren zum Betreiben einer Temperiereinheit gemäß den unabhängigen Ansprüchen geschaffen.

Gemäß einem ersten Aspekt der vorliegenden Erfindung wird eine Temperiereinheit für eine Ofenvorrichtung zum Wärmebehandeln einer Platine, insbesondere einer Metallplatine beschrieben. Die Temperiereinheit weist einen oder mehrere Temperierkörper auf, welcher in einem Ofenraum der Ofenvorrichtung anordbar ist. Der Temperierkörper weist eine Vielzahl von Aufnahmebohrungen (insbesondere als Durchgangsöffnungen ausgebildet) auf. Ferner weist die Temperiereinheit eine Vielzahl von Temperierstiften auf, wobei die Temperierstifte relativ zu dem Temperierkörper beweglich in den Aufnahmebohrungen gelagert sind. Die Temperierstifte sind derart steuerbar, dass eine Temperiergruppe der Temperierstifte aus dem Temperierkörper in Richtung Platine ausfahrbar ist, damit ein thermischer Kontakt zwischen den Temperierstiften der Temperiergruppe mit einer vorbestimmten Temperierzone der Platine generierbar ist.

Gemäß einem weiteren Aspekt der vorliegenden Erfindung wird ein Verfahren zum Betreiben einer Temperiereinheit für eine Ofenvorrichtung zum Wärmebehandeln einer Platine, insbesondere einer Metallplatine bereitgestellt. Gemäß dem Verfahren wird werden Temperierstifte derart gesteuert, dass eine Temperiergruppe der Temperierstifte aus einem Temperierkörper in Richtung Platine ausgefahren wird, damit ein thermischer Kontakt zwischen den Temperierstiften der Temperiergruppe mit einer vorbestimmten Temperierzone der Platine generierbar ist. Der Temperierkörper ist in einem Ofenraum der Ofenvorrichtung anordbar, wobei der Temperierkörper eine Vielzahl von Aufnahmebohrungen aufweist und die Temperierstifte relativ zu dem Temperierkörper beweglich in den Aufnahmebohrungen gelagert sind.

Die Platine beschreibt ein Metallwerkstück bzw. ein Halbzeug, aus welchem ein Bauteil mit einer gewünschten Form und Duktilität hergestellt wird. Die Platine ist beispielsweise ein Metallblech mit einer Dicke von weniger als ungefähr 2 cm, insbesondere weniger als ungefähr 1 cm. Mittels des Metallbauteils kann beispielsweise eine Metallvorrichtung, wie z.B. eine Kraftfahrzeugkomponente hergestellt werden. Beispielsweise kann die Kraftfahrzeugkomponente eine A-oder B-Säule eines Kraftfahrzeugs, eine Stoßstange oder ein Türaufprallträger eines Kraftfahrzeugs darstellen.

Die Ofenvorrichtung ist zum Erhitzen der Platine ausgebildet. Die Platine wird in der Ofeneinrichtung auf eine gewünschte Temperatur, z.B. auf Austenitisierungstemperatur, erwärmt oder abgekühlt. Die Austenitisierungstemperatur beträgt beispielsweise ungefähr 750° C bis ungefähr 1000° C, wobei die untere Grenze der Austenitisierungstemperatur von dem Material des Metallbauteils (Stahl- und Legierungsanteile) abhängt. Oberhalb der Austenitisierungstemperatur liegt ein vollständiges austenitisches Gefüge im Metallbauteil vor.

Die Temperiereinheit kann eine Kühlung von Platinen (d.h. z.B. einem metallischem Stückgut aber auch metallischem Band) in einer heißen Zone (bis zu 1000°C) des Ofenraums einer Ofenvorrichtung zur Erreichung von verschiedenen Härtewerten in verschiedenen Bereichen der Platine bereitstellen. Ein Übergangsbereich von hartem zu weichem Bereich ist dabei variabel einstellbar, je nach Einstellung der Temperiergruppe. Die gewünschte Temperierzone der Platine wird mit der unten konkreter definierten Temperiergruppe an Temperierstiften gezielt temperiert, d. h. erwärmt oder gekühlt.

Ferner kann der Kontaktkühler bzw. die Temperiereinheit in verschiedenen Gasatmosphären (Luft, trockene Luft, Schutzgase) in dem Ofenraum eingesetzt werden. Die zu behandelnde Platine (Stückgut oder Band) kann mit verschiedenen metallischen, oder metalloxidischen Beschichtungen überzogen sein (feueraluminiert, feuerverzinkt, etc.).

Die Ofenvorrichtung weist den Ofenraum oder eine Vielzahl verschiedener Ofenräume auf. In jedem Ofenraum kann beispielsweise eine bestimmte Temperatur eingestellt werden, so dass die Platine in jedem der Ofenräume einer bestimmten Temperatur zum Erhitzen oder zum Abkühlen ausgesetzt ist. Die Ofenvorrichtung kann insbesondere derart ausgebildet sein, dass ein vorbestimmtes, zeitlich veränderbares Temperaturprofil in dem Ofenraum eingestellt werden kann. Das Temperaturprofil wirkt auf die Platine ein, während sich diese in dem Ofenraum des Ofengehäuses der Ofenvorrichtung befindet. Beispielsweise kann die Ofenvorrichtung derart ausgebildet sein, dass die Platine ortsfest während des gesamten Temperiervorgangs stationär in dem Ofengehäuse und somit in ein- und demselben Ofenraum vorliegt. Alternativ kann die Ofenvorrichtung beispielsweise nach Bauart eines Durchlaufofens ausgebildet sein, so dass die Platine durch eine Förderrichtung sequenziell oder kontinuierlich durch den Ofenraum bzw. durch mehrere, entlang der Förderrichtung hintereinander angeordneter Ofenräume befördert wird.

Ein vorbestimmtes, zeitlich veränderbares Temperaturprofil (z.B. Aufwärm-und/oder Abkühlprofil) beschreibt einen örtlichen und/oder zeitlichen Temperaturverlauf einer Temperatur, welche in einem bestimmten Ofenraum einstellbar ist und auf die gesamte Platine bzw. auf vorbestimmte Bereiche der Platine wirkt. So kann beispielsweise in der Ofenvorrichtung die Platine in einem ersten Ofenraum auf eine vorbestimmte Temperatur erwärmt werden und zu einem anderen Zeitpunkt bzw. in einen weiteren zweiten Ofenraum eine andere Temperatur eingestellt werden, welche auf die Platine wirkt und diese abkühlt oder weiter erwärmt.

Hierzu können in dem Ofenraum beispielsweise Heizelemente oder Kühlelemente angeordnet werden, um ein gewünschtes Temperaturprofil in dem Ofenraum einzustellen, so dass die Platine gezielt erwärmt, abgekühlt oder temperaturgleich gehalten wird. Die Temperatur in einem Ofenraum der Ofenvorrichtung kann beispielsweise zwischen ungefähr 100° C bis ungefähr 1000° C eingestellt werden.

Um gezielt unterschiedlich duktile Bereiche einer Platine einzustellen, werden gezielt bestimmte Bereiche der Platine zeitlich unterschiedlich erwärmt und insbesondere zeitlich unterschiedlich abgekühlt, um somit unterschiedliche Gefügebereiche in den verschiedenen Bereichen der Platine einzustellen. Insbesondere bei einer Erwärmung des Metallbauteils kann die Erwärmungsgeschwindigkeit von ungefähr 1 K/s bis ungefähr 20 K/s betragen. Mittels der Temperierung des Ofenraumes und insbesondere der Temperierung des weiter unten im Detail beschrieben Bandelements können Bereiche des Metallbauteils beispielsweise auch abgekühlt werden, d.h. dass Abkühlgeschwindigkeit von ungefähr 1 K/s bis ungefähr 40 K/s erzielbar sind.

In der vorliegenden Erfindung kann insbesondere eine vorbestimmte Temperierzone mit einer Temperiergruppe an Temperierstiften gezielt temperiert, d. h. erwärmt oder gekühlt, werden, um die gewünschten Gefügebereiche in der Temperierzone einzustellen. Dabei können insbesondere vorbestimmte Temperierzonen der Platine langsam oder schnell abgekühlt werden, indem beispielsweise die Temperiergruppe der Temperierstifte in thermischen Kontakt mit einem vorbestimmten Oberflächenbereich (Temperierzone) der Platine, welcher abgekühlt werden soll, gebracht wird. Alternativ können insbesondere vorbestimmte Bereiche der Platine schnell erhitzt werden, indem die Temperiergruppe der Temperierstifte in thermischen Kontakt mit einer vorbestimmten Temperierzone der Platine, welche schnell erhitzt werden soll, gebracht wird.

Im Weiteren wird mit dem Begriff "thermischer Kontakt" eine thermische Wechselwirkung zwischen zwei entsprechenden Elementen, z.B. den Temperierstiften einerseits und der Platine andererseits, verstanden, so dass ein schneller Temperaturaustausch zwischen den entsprechenden zwei Elementen ermöglicht wird. Ein solcher schneller Temperaturaustausch zwischen den entsprechenden zwei Elementen (z.B. den Temperierstiften einerseits und der Platine andererseits) kann insbesondere dadurch erzielt werden, indem die Temperierstifte der Temperiergruppe in physischen Kontakt mit der Temperierzone der Platine vorliegt bzw. ist. Dies bedeutet beispielsweise, dass die Temperierstifte der Temperiergruppe den gewünschten Bereich (Temperierzone) der Platine berühren, so dass schnell thermische Energie ausgetauscht werden kann. Dies führt zu einer Kühlung oder Erwärmung der Temperierzone der Platine.

Alternativ kann unter thermischen Kontakt verstanden werden, dass zwischen den Temperierstiften der Temperiergruppe und der Temperierzone der Platine, ein geringer Abstand besteht, d.h. ein Abstand zwischen ungefähr 1 Millimeter und ungefähr 5 Zentimeter, um so definierte Gefüge mit entsprechend unterschiedlichen Härten einstellen zu können.

Der Temperierkörper weist insbesondere eine hohe Wärmespeicherkapazität auf, so dass dieser eine Temperierung (Erwärmung oder Abkühlung) der Temperierstifte durchführen kann. Wie weiter unten im Detail bezüglich verschiedener beispielhafter Ausführungsformen beschrieben, kann der Temperierkörper austauschbar in dem Ofenraum angeordnet werden und/oder mittels einer Kühl- oder Heizeinrichtung (d.h. einer Temperiereinrichtung) versehen werden. Der Temperierkörper kann beispielsweise ein Hohlkörper sein, welcher mit einem Kühlmedium gefüllt ist. Das Kühlmedium kann beispielsweise ein flüssiges oder gasförmiges Medium, wie beispielsweise Wasser oder andere geeignete Flüssigkeiten oder Gase, sein. Die Wände des Temperierkörpers können aus einem Material mit einer hohen Wärmeleitfähigkeit, wie beispielsweise einem metallischen Material, bestehen.

Der Temperierkörper weist entsprechend eine Vielzahl von Aufnahmebohrungen auf, in welche jeweils einer der Temperierstifte einbringbar ist. In Abhängigkeit von der Temperierzone der Platine, d.h. desjenigen Bereichs, welcher von den Temperierstiften temperiert werden soll, können bestimmte Temperierstifte zu der Temperiergruppe zusammengefasst werden und in Richtung Platine verfahren werden. Die Temperierstifte der Temperiergruppe können somit zwischen einer ersten Position und einer zweiten Position derart bewegbar angeordnet sein, dass die Temperierstifte der Temperiergruppe in der ersten Position entfernt von der Platine ohne thermischen Kontakt mit der Platine vorliegen und in der zweiten Position mit der Platine in thermischen Kontakt vorliegen. Die Temperierstifte, welche nicht der Temperiergruppe zugehörig sind, werden nicht verfahren und bleiben in der ersten Position, d. h. beabstandet von der Platine. Die Temperierstifte können direkt auf der Oberfläche der Platine aufliegen. Erhebungen der Kontur der Oberfläche der Platine verschieben die entsprechenden Temperierstifte in Richtung Temperierkörper und Vertiefungen in der Kontur der Oberfläche der Platine verschieben die entsprechenden Temperierstifte von dem Temperierkörper fort. Somit können selbst bei einer unebenen Ausführung der Platine die Temperierstifte auf der Oberfläche der Platine aufliegen. Somit kann selbst bei unebenen Platinen eine homogene Temperierung (Erwärmung oder Abkühlung) der Platine umgesetzt werden. Die Temperiereinheit bildet z.B. einen Kontaktkühler (sog. Nagelkühler) aus. Die Temperierstifte bilden beispielsweise Kontaktelemente mit der Platine aus.

Die Temperierstifte der Temperiergruppe sind derart verschiebbar in den jeweiligen Aufnahmebohrungen des Temperierkörpers angeordnet, dass die Temperierstifte in der zweiten Position auf einer Oberfläche der Platine auflegbar sind und an eine Kontur der Oberfläche der Platine anpassbar sind. Die Temperierstifte sind konstruktiv so ausgelegt, dass sie Unebenheiten der Platinen ausgleichen können. Beim Abkühlen der Platine kann sich diese verziehen. Die Temperierstifte können in einer Ausführungsform in dem Kühler bzw. Temperierkörper frei hängen und sich in Richtung Platine frei verschieben und können dadurch Unebenheiten ausgleichen.

Die Temperierstifte bestehen beispielsweise aus Stahl oder einem hochtemperaturleitfähigen Material, wie beispielsweise Magnesium, Kupfer oder Aluminium. Die Temperierstifte können beispielsweise einen Durchmesser von ungefähr 4 bis ungefähr 15 Millimeter aufweisen. Die Temperierstifte weisen beispielsweise eine Länge von ungefähr 5 bis ungefähr 50 Zentimeter, insbesondere von ungefähr 10 bis ungefähr 20 Zentimeter auf.

Der Temperierkörper besteht z.B. ebenfalls aus Stahl, oder einem temperaturleitfähigen Material, wie beispielsweise aus Kupfer. In einer beispielhaften Ausführungsform weisen die Temperierstifte beispielsweise einen Durchmesser von ungefähr 4,8 Millimeter auf. Entsprechend können die Aufnahmebohrungen einen Durchmesser von beispielsweise ungefähr 5 Millimeter aufweisen. Zur besseren Führung oder Kühlwirkung beziehungsweise schnellen Rückkühlung der Temperierstifte kann der Temperierkörper eine Dicke von ungefähr 10 bis ungefähr 50 Zentimeter aufweisen.

Gemäß der vorliegenden Erfindung kann die Temperiergruppe flexibel erweitert bzw. geändert und entsprechend an unterschiedliche Temperierzonen der Platine angepasst werden. Diesbezüglich können die Temperierstifte individuell oder gruppenweise gesteuert werden, insbesondere mit den später detailliert beschreibenden Steuermechanismen. Somit kann beliebig eine Temperiergruppe definiert werden, welche bestimmte Temperierzonen der Platine mit einer vorbestimmten Temperierkurve (beispielsweise mit einer bestimmten Abkühlgeschwindigkeit) abkühlen, während die Bereiche der Platine um die Temperierzone nicht durch die Temperierstift der Temperiergruppe temperiert werden.

Gemäß einer weiteren beispielhaften Ausführungsform weist der Temperierkörper einen Temperierkanal für ein Temperierfluid zum Temperieren des Temperierkörpers auf. Der Temperierkörper kann beispielsweise als Hohlprofil ausgebildet sein und somit ein inneres Kühlvolumen bzw. den Temperierkanal bilden. Die Aufnahmebohrungen können in vorbestimmten Reihen und Spalten in dem Temperierkörper angeordnet werden. Der Temperierkanal führt um die Aufnahmebohrung herum. Über einen Fluidanschluss kann der Temperierkanal bzw. das Temperiervolumen in dem Temperierkörper mit dem Fluid befüllt und entleert werden. Das Fluid zum Temperieren ist insbesondere gasförmig oder flüssig. Beispielsweise kann das Medium ein Kühlmittel bzw. eine Kühlflüssigkeit zum Kühlen des Temperierkörpers sein. Somit kann eine Flüssigkeitskühlung/- erwärmung des Temperierkörpers umgesetzt werden, so dass permanent die Temperierstifte, welche sich in thermischen Kontakt mit dem Temperierkörper befinden, temperiert werden.

Gemäß einer weiteren beispielhaften Ausführungsform ist der Temperierkörper mittels additiver Fertigung hergestellt. Die additive Fertigung gemäß der vorliegenden Anmeldung weist beispielsweise ein dreidimensionales Drucken auf, wobei der Temperierkörper Schicht für Schicht hergestellt wird. Dabei können verschieden Varianten des dreidimensionalen Druckens eingesetzt werden. In einer ersten Variante des dreidimensionalen Druckens wird ein druckbares Material z.B. in einem Druckkopf eingebracht. Anschließend wird das druckbare Material in dem Druckkopf geschmolzenen. Der Druckkopf kann ein aufheizbarer Extruder sein, in welchem das Material zugeführt wird. Innerhalb des Extruders wird das Material geschmolzen, so dass das Material durch den Extruder (zum Beispiel durch eine Extruderdüse) zu einer Trägerschicht transferiert werden kann, auf welcher das geschmolzene Material aufgebracht und/oder eingebracht werden soll. Der Druckkopf und die Trägerschicht können relativ zu einander bewegt werden. Nachdem die eingebrachte/aufgebrachte Schicht des Temperierkörpers verfestigt (ausgehärtet) ist, wird nachfolgend eine weitere Schicht des Teiles des Temperierkörpers mittels des Druckkopfes geformt.

Das dreidimensionale Drucken kann ferner in einer weiteren Variante ein Aufbringen eines druckbaren Materiales, insbesondere eines pulverförmigen Materials, auf einer Auflagefläche aufweisen, wobei das Material anschließend thermisch, fotosensitiv oder mittels eines Adhäsivs verfestigt wird. Das Adhäsiv verklebt die einzelnen Partikel des pulverförmigen Materials, sodass eine entsprechende Schicht gebildet wird. Das Adhäsiv kann mittels eines Druckkopfes auf die Pulverschicht aufgebracht werden. Während des 3D Druckens mit Pulver wird die erste (unterste) Schicht mit Hilfe eines fluidischen Adhäsivs auf die Pulverschicht aufgebracht. Der 3D Drucker zeichnet ein 3D Bild auf die erste Schicht des Pulverbettes und klebt die Materialpartikel des Pulvers zusammen. Nach diesem Schritt wird eine weitere dünne Pulverschicht auf die erste Schicht aufgebracht und die 3D Druckprozedur wird zum Erzeugen einer zweiten Schicht wiederholt. Somit wird ein 3D Model des Temperierkörpers Schicht für Schicht durch das zusammenkleben von Pulverschichten erzeugt. Der Temperierkörper wächst in diesem Fall von unten nach oben. Dafür wird das Pulverbett z.B. um die Höhe einer Pulverschicht herabgesenkt. Das Pulver und das Adhäsiv können aus verschiedenen Materialien bestehen.

Anstatt ein Adhäsiv zu verwenden, welche die Materialpartikel miteinander verklebt, können in einer weiteren Variante die einzelnen Schichten geschmolzen werden und zwar mittels einer thermischen Behandlungsvorrichtung, wie einem Laser. Dieses thermische Behandlungsverfahren wird selektiven Lasersintern (SLS) oder selektiven Laserschmelzens (SLM) genannt. Durch das thermische Behandeln der Materialien können Metalle, Keramiken oder Sand verwendet werden. Wenn SLS oder SLM als Herstellungsverfahren verwendet wird, wird das Ausbilden der Schicht von dem Pulvermaterial mittels eines Lasers durchgeführt, wobei der Laser das Pulvermaterial schmilzt oder sintert, um zumindest eine Schicht des Temperierkörpers zu bilden.

Ferner kann das druckbare Material zum Bilden des Temperierkörpers mittels additiver Fertigung mittels eines steuerbaren Elektronenstrahles geschmolzen werden, was als sogenanntes Elektronenstrahlschmelzen (EBM) bezeichnet wird. Dieser Herstellungsprozess erlaubt die Verwendung von Materialen mit einem höheren Schmelzpunkt, wie zum Schmelzen von Titanmaterialien.

Beispielsweise wird das druckbare Material mittels einer Materialzuführdüse aufgebracht. Das druckbare Material, z.B. Pulver, wird mittels der Materialzuführdüse bereitgestellt, so dass das aufzubringende druckbare Material aus der Materialzuführdüse heraus gesprüht wird. Mittels der Materialzuführdüse kann eine präzise Materialmenge bereitgestellt werden. sodass nur der zu druckende Teil des Komponententrägers mit einer (neuen) Schicht druckbaren Materials bedeckt werden muss, um den Temperierkörper zu bilden. Die Materialzuführdüse zum Formen einer weiteren Schicht von dem Temperierkörper ist beispielsweise bewegbar. In Abhängigkeit von der Bewegung der Materialzuführdüse kann die Dicke und der Ort der zu bildenden Schicht eingestellt werden. Dieser Schritt kann solange wiederholt werden, bis eine finale Dicke der Schicht erhalten wird. Somit wird der Temperierkörper Schicht für Schicht mittels Aufsprühens von druckbarem Material ausgebildet.

Gemäß einer Variante wird eine Schicht des Temperierkörpers in einem Materialbett aus z.B. flüssigen oder pulverförmigen Material platziert. Eine Schicht des Temperierkörpers wird zwischen der Oberfläche des Materialbetts und einem Untergrund verfestigt. Die Verfestigung bzw. Konsolidierung kann mittels einer Behandlungsvorrichtung durchgeführt werden, welche zum Anwenden von thermischer Energie auf die Oberfläche des Materialbettes und/oder zum Abstrahlen einer vordefinierten Wellenlänge des Lichtes zur Photopolymerisation der Oberfläche des Materialbettes ausgebildet sein kann. Ein flüssiges Fluidmaterial ist beispielsweise ein photosensitives Material, insbesondere ein Fluidmaterial, welches photosensitiv aushärtbar unter ultraviolettem Licht des Lasers ist. Als ein weiterer Herstellungsprozess, welcher Fluidmaterialen verwendet, kann sogenanntes Multi-Jet Modelling, Poly-Jet Modelling angewandt werden. Bei diesen Verfahren wird das Fluidmaterial direkt beim Aufbringen mittels einer Lichtquelle verfestigt.

Gemäß einer weiteren beispielhaften Ausführungsform weist der Temperierkörper Hülsen auf, welche in den Aufnahmebohrungen angeordnet sind. Die Hülsen können beispielsweise aus einem hoch temperaturleitenden Material bestehen. Der Temperierkörper weist beispielsweise Lochplatten auf, wobei die Löcher die Aufnahmebohrungen bilden. In diesen Aufnahmebohrungen werden die Hülsen eingesteckt und mit dem Wärmetauscher bzw. Temperierkörper verlötet. Beispielsweise können die Aufnahmebohrungen und/oder Hülsen belotet werden und in einem Vakuumofen letztlich verlötet werden. Die Lötverbindung kann auch mittels Ofenlöten in Schutzgas oder mittels direkten Verlöten geschaffen werden.

Der Temperierkörper kann beispielsweise integral und einstückig gefertigt werden. Alternativ kann der Temperierkörper aus mehreren Modulen gefertigt werden, welche anschließend miteinander verlötet werden. Die Module können beispielsweise lösbar miteinander gekoppelt werden oder, beispielsweise Schweißens oder Lötens, fest miteinander verbunden werden.

Gemäß einer weiteren beispielhaften Ausführungsform weisen die Temperierstifte eine zylindrische Form mit einer kreisförmigen, elliptischen oder polygonen, insbesondere viereckigen, Grundfläche auf. Insbesondere bei einer Ausbildung der Temperierstifte mit Einer zylindrischen Form aufweisend eine viereckige Grundfläche können in einer sehr dichten Anordnung Reihen und Spalten von Temperierstiften entsprechenden Aufnahmebohrungen des Temperierkörpers eingebracht werden. Somit kann eine entsprechend hohe Auflösung an Temperierstiften bereitgestellt werden, die in entsprechende Aufnahmebohrungen des Temperierkörpers verfahren werden können. Dies führt dazu, dass die Temperierzone äußerst exakt und vielfältig definiert werden kann.

Gemäß einer weiteren beispielhaften Ausführungsform unterscheiden sich zumindest zwei der Temperierstifte in ihrem Durchmesser (bzw. Kantenlängen). Gemäß einer weiteren beispielhaften Ausführungsform unterscheidet sich zumindest zwei der Aufnahmebohrungen sich in ihrem Durchmesser. Mit anderen Worten können Temperierstifte mit voneinander unterschiedlichen Profildicken eingesetzt werden. So können beispielsweise in einem Zentrum die Aufnahmebohrungen und die entsprechenden Temperierstifte größer ausgebildet sein als die Aufnahmebohrungen und die Temperierstifte, welche das Zentrum umgeben. Finden sich in einem Umgebungsbereich um das Zentrum mehrerer eng aneinander angeordnete Stifte bzw. Aufnahmebohrungen, so kann gerade im Randbereich sehr exakt aufgrund der hohen Dichte an Temperierstiften eine Temperierzone definiert werden, während in einem Zentrum größere Temperierstifte eingesetzt werden können, die beispielsweise eine größere Auflagefläche mit der Platine und entsprechend einen guten thermischen Kontakt mit der Platine ausbilden.

Mit der definierte Geometrien der Temperiergruppe und der Temperierstifte können verschiedene Temperierzonen, d.h. gekühlten Bereiche der Platine, mit homogenen oder inhomogenen und einstellbaren Härtebereichen durch Variation der Nagelgrößen und/oder Kühlleistung des Kühlkörpers eingestellt werden.

Gemäß einer weiteren beispielhaften Ausführungsform unterscheidet sich die Dichte (Anzahl von Aufnahmebohrungen pro Flächeneinheit) von Aufnahmebohrungen in einem ersten Bereich des Temperierkörpers von einer Dichte (Anzahl von Aufnahmebohrungen pro Flächeneinheit) von Aufnahmebohrungen in einem zweiten Bereich des Temperierkörpers unterscheidet. Mit anderen Worten unterscheidet sich ein erster Abstand zwischen zwei Aufnahmebohrungen in einem ersten Bereich des Temperierkörpers sich von einem zweiten Abstand zwischen zwei Aufnahmebohrungen in einem zweiten Bereich des Temperierkörpers. Somit kann sich auch die Anzahl der Temperierstifte, welche in den Aufnahmebohrungen angeordnet sind, in verschiedenen Bereichen des Temperierkörpers unterscheiden. Indem der Lochabstand zwischen den Aufnahmebohrungen variiert wird, kann die Kühlleistung eingestellt werden und lokal, z.B. von Bereich zu Bereich, unterschiedlich sein. Somit können auch flexibel gewalzte Platinen wärmebehandelt werden. Die lokal unterschiedlichen Blechdicken erfordern verschiedene Kühlleistungen der Temperierstifte. Indem die Kühlleistung an die Blechdicke der Platinen mittels der Anzahl an Temperierstiften in verschiedenen Bereichen angepasst wird, können trotzdem gleiche Gefügeeigenschaften in unterschiedlichen Blechdickenbereichen erreicht werden.

Gemäß einer weiteren beispielhaften Ausführungsform weist die Temperiereinheit eine Steuerplatte auf, an welcher die Temperierstifte gekoppelt sind. Die Steuerplatte ist an einer der Platine abgewandten Seite des Temperierkörpers angeordnet, wobei die Steuerplatte relativ zu dem Temperierkörper beweglich derart angeordnet ist, dass die Steuerplatte die Temperierstifte (insbesondere ausschließlich die Temperierstifte der Temperiergruppe) durch die Aufnahmebohrungen des Temperierkörpers bewegt.

An der Steuerplatte können beispielsweise die Temperierstifte, und insbesondere die Temperierstifte der Temperiergruppe, unbeweglich fixiert werden, sodass die Steuerplatte bei Bewegung in Richtung Temperierkörper die Temperierstifte durch die Aufnahmebohrungen in Richtung Platine hindurchschiebt oder bei Bewegung entgegen der Richtung des Temperierkörpers die Temperierstifte von der Platine entfernt.

Die Steuerplatte kann beispielsweise mit einem Steuermotor, welcher elektrisch, magnetisch bzw. elektromagnetisch oder hydraulisch fungiert, relativ zu dem Temperierkörper bewegt werden.

Gemäß einer weiteren beispielhaften Ausführungsform weist die Steuerplatte Durchgangsbohrungen auf, in welchen die Temperierstifte verschiebbar gelagert sind. Die Temperierstifte weisen jeweils einen Stiftkopf auf, welcher einen größeren Durchmesser als die entsprechende Durchgangsbohrung aufweist, in welcher der entsprechende Temperierstift eingesteckt ist. Die Temperierstifte sind derart in den entsprechenden Durchgangsbohrungen eingesteckt, dass ein Herausfallen in Richtung Temperierkörper mittels der Stiftköpfe verhindert wird sind. Beispielsweise kann die Temperiereinheit derart ausgerichtet sein, dass die Temperierstifte aufgrund der Schwerkraft sich in Richtung Platine bewegen, bis der Stiftkopf auf der Steuerplatte aufliegt und ein weiteres verfahren des Temperierstifts in Richtung Platine gestoppt wird. Erfährt der Temperierstift eine Druckkraft entgegen der Schwerkraftrichtung, beispielsweise aufgrund einer Erhebung auf der Platine oder aufgrund eines Rückhaltemechanismus bzw. aufgrund einer Verriegelung einer zugehörigen Aufnahmebohrung in dem Temperierkörper, so kann sich dennoch der Temperierstift entgegen der Schwerkraftrichtung relativ zu der Steuerplatte bewegen.

Beispielsweise können bestimmte Aufnahmebohrungen des Temperierkörpers gezielt verschlossen werden, sodass nur die Temperierstifte der Temperiergruppe durch die nicht verschlossenen Aufnahmebohrungen durchgeführt werden können. In diesem Fall kann sich beispielsweise die Steuerplatte in Richtung Schwerkraftrichtung bzw. in Richtung Temperierkörper bewegen, sodass die Temperierstifte der Temperiergruppe durch den Temperierkörper in Richtung Platine verfahren werden, während die anderen Temperierstifte außerhalb der Temperiergruppe auf dem Temperierkörper aufliegen und nicht in Richtung Platine verfahren werden.

Gemäß einer weiteren beispielhaften Ausführungsform ist die Steuerplatte beabstandet zu dem Temperierkörper derart verfahrbar, dass zwischen der Steuerplatte und dem Temperierkörper ein Zwischenraum gebildet ist, in welchen zumindest ein Teil der Temperierstifte vorliegen. In dem Zwischenraum ist ein Temperierfluid zum Temperieren des Teils der Temperierstifte einbringbar. Beispielsweise kann eine Kühlflüssigkeit oder ein Kühlgas diesen Zwischenraum eingestimmt werden, um eine Temperierung der Temperierstifte durchzuführen.

Gemäß einer weiteren beispielhaften Ausführungsform weist die Temperiereinheit ein Isolierelement zum thermischen Isolieren des Temperierkörpers von der Platine auf. Das Isolierelement an dem Temperierkörper derart angeordnet ist, dass ein Bereich des Temperierkörpers, aus welchen die Temperierstifte der Temperiergruppe aus dem Temperierkörper in Richtung Platine ausfahrbar sind, frei von dem Isolierelement bleibt. Das Isolierelement isoliert den Temperierkörper thermisch von der Platine in den Bereichen, in welchen ein thermischer Kontakt zwischen Temperierkörper/Temperierstifte und Platine gewünscht ist.

Das Isolierelement ist beispielsweise eine temperaturfeste Isolierplatte oder ein Isoliermaterial bestehen beispielsweise aus Mineralfasern. Auch eine Kombination aus verschiedenen Isoliermaterialien in Form eines Schichtaufbaus ist möglich.

Gemäß einer weiteren beispielhaften Ausführungsform ist das Isolierelement derart an dem Temperierkörper angeordnet, dass das Isolierelement die Aufnahmebohrungen des Temperierkörpers, in welchen Temperierstifte vorliegen, die nicht zu der Temperiergruppe der Temperierstifte gehören, abdeckt, um ein Verfahren der entsprechenden Temperierstifte in Richtung Platine zu versperren. Das Isolierelement fungiert somit entsprechend der im Folgenden beschriebenen Steuerschablonen.

Gemäß einer weiteren beispielhaften Ausführungsform weist die Temperiereinheit eine Steuerschablone auf, wobei die Steuerschablone ein vorbestimmtes Muster an Durchgangsöffnungen für die Temperierstifte der Temperiergruppe aufweist, wobei das Muster an Durchgangsöffnungen indikativ für die Temperierzone der Platine ist (d. h. eine Projektion des Musters an Durchgangsöffnungen auf der Platine ergibt die Temperierzone). Die Steuerschablone ist mit einer vorbestimmten Orientierung an dem Temperierkörper derart angeordnet, dass aufgrund des Musters an Durchgangsöffnungen ausschließlich die Temperierstifte der Temperiergruppe durch die Durchgangsöffnungen der Steuerschablone sowie durch die Aufnahmebohrungen des Temperierkörpers durchführbar sind, um den thermischen Kontakt zwischen den Temperierstiften der Temperiergruppe mit der Temperierzone der Platine zu generieren. Die Steuerschablone kann dabei auch als Isolierung zwischen Platine und Temperierkörper ausgeführt werden und ebenfalls mit Durchgangsöffnungen versehen werden.

Gemäß einer weiteren beispielhaften Ausführungsform ist die Steuerschablone austauschbar an dem Temperierkörper anbringbar. Die Steuerschablone kann beispielsweise mittels einem lösbaren Verbindungsmittel, wie beispielsweise einer Schraubverbindung oder einer Klemmverbindung, austauschbar an dem Temperierkörper angebracht werden. Somit können verschiedene Steuerschablonen mit unterschiedlichen Mustern an Durchgangsöffnungen befestigt werden, sodass in einfacher Art und Weise zügig verschiedene ausgebildete Temperierzone der Platine temperiert werden können.

Gemäß einer weiteren beispielhaften Ausführungsform weist der Temperierkörper zwei gegenüberliegende Führungsleisten auf, zwischen welchen die Steuerschablone schubladenartig einschiebbar und fixierbar ist.

Es einer weiteren beispielhaften Ausführungsform weist der Temperierkörper einen inneren Hohlraum auf, in welchen die Steuerschablone einschiebbar und fixierbar ist. Insbesondere können die Führungsleisten auf einer der Platine gegenüberliegenden Fläche des Temperierkörpers angeordnet werden, sodass die Steuerschablonen zwischen dem Temperierkörper und der Steuerplatte angeordnet werden können.

Gemäß einer weiteren beispielhaften Ausführungsform weist die Temperiereinheit ferner einen Steuermechanismus auf, welcher derart mit dem Temperierkörper gekoppelt ist, dass ausschließlich die Temperierstifte der Temperiergruppe aus dem Temperierkörper in Richtung Platine ausfahrbar sind. Beispielsweise kann jedem Temperierstift ein Steuerelement bzw. Steuermotor, welcher pneumatische oder elektronisch die Temperierstifte antreibt, zugeordnet werden. Somit kann über die Steuerung der einzelnen Temperierstifte eine gewünschte Temperiergruppe gebildet werden, welche der Temperierzone der Platine entspricht.

Gemäß einer weiteren beispielhaften Ausführungsform weist der Steuermechanismus ein Magnetmechanismus auf, welcher konfiguriert ist, ein magnetisches Feld zu generieren, welches indikativ zu der Form der Temperierzone der Platine entspricht. Der Magnetmechanismus ist derart mit dem Temperierkörper gekoppelt, dass aufgrund des magnetischen Feldes ausschließlich die Temperiergruppe der Temperierstifte aus dem Temperierkörper in Richtung Platine ausfahrbar ist. Der Magnetmechanismus kann beispielsweise mehrere Elektromagnete oder elektrisch ausschaltbare Permanentmagnete aufweisen, die einzelnen gesteuert werden können, um das magnetische Feld zu generieren. Dabei kann das magnetische Feld abstoßend auf die Temperierstifte der Temperiergruppe wirken, sodass die Temperierstifte in Richtung Platine gedrückt werden. Alternativ kann der Magnetmechanismus derart angeordnet werden, dass die Platine zwischen dem Magnetmechanismus und dem Temperierkörper vorliegt. Das magnetische Feld wirkt entsprechend anziehend auf die Temperierstifte der und zieht die Temperierstifte der Temperiergruppe von dem Temperierkörper in Richtung Platine.

Gemäß einer weiteren beispielhaften Ausführungsform ist der Temperierkörper derart anordbar, dass die Temperierstifte schwerkraftbasiert in Richtung Platine ausfahrbar sind. Das magnetische Feld ist derart ausgebildet, dass auf die Temperierstifte, welche nicht der Temperiergruppe zugehörig sind, eine magnetische Rückhaltekraft wirkt, so dass ausschließlich die Temperierstifte der Temperiergruppe ausfahrbar sind. Mit anderen Worten wirkt das magnetische Feld auf die Temperierstift, welche nicht der Temperiergruppe zugehörig sind derart, dass die Magnetkraft von der Platine in Richtung Temperierkörper wirkt.

Somit ist eine Automatisierung der gewünschten Kühlgeometrien/Temperierzonen der Platine (z.B. über magnetische Ansteuerung jedes einzelnen Nagels bzw. Temperaturstifts oder Einschub einer unterschiedlichen Steuerschablone mit gewünschter Kühlgeometrie) möglich.

Gemäß einer weiteren beispielhaften Ausführungsform weist die Temperiereinheit eine Vielzahl von Rückstellfedern auf, welche derart eingerichtet sind, dass eine Rückstellfeder einem Temperierstift zugeordnet ist und derart mit diesem gekoppelt ist, dass der entsprechende Temperierstift mittels der Rückstellfeder in einer Position entfernt von der Platine fixierbar ist. Mit anderen Worten werden Druck oder Zugfedern eingesetzt, deren Federkraft in eine Richtung von der Platine in Richtung Temperierkörper wirkt um die Temperierstifte von der Platine fortzuhalten.

Alternativ können die Rückstellfedern ebenfalls in eine Richtung wirken, welche von dem Temperierkörper in Richtung Platine verläuft. Die Rückstellfedern dienen somit als Antriebsfedern und drücken die Temperierstifte in Richtung Platine. Der Steuermechanismus, beispielsweise der Magnetmechanismus wirkt somit entgegen der Rückstellfeder, sodass beispielsweise die Temperierstifte, welche nicht der Temperiergruppe zugehörig sind, in Richtung Temperierkörper bewegt werden oder andere Temperierkörper gehalten werden.

Gemäß einer weiteren beispielhaften Ausführungsform ist eine Steuereinheit konfiguriert, Positionsdaten der Platine zu erhalten, wobei die Steuereinheit ferner konfiguriert ist, basierend auf den Positionsdaten die Temperierstifte der Temperiergruppe auszuwählen, um basierend auf einer aktuellen Position der Platine die Temperierzone der Platine zu generieren.

Beispielsweise über Sensoren, wie Kameraeinrichtungen, Distanzsensoren (zum Beispiel Ultraschallsensoren) und/oder Infrarotsensoren, kann die exakte Position des Bauteils bzw. der Platine in der Ofenvorrichtung bestimmt werden. Basierend auf diesen Positionsdaten kann die Steuereinheit die IstPosition der gewünschten Temperierzone der Platine bestimmen. Darauf basierend bestimmt die Steuereinheit die Temperierstifte, welche die Temperiergruppe bilden sollen. Basierend darauf steuert die Steuereinrichtung die Steuerplatte und/oder den Steuermechanismus, um gezielt die Temperierstifte der Temperiergruppe in Richtung Platine zu verfahren und die Temperierstifte, welche nicht der Temperiergruppe angehören, entfernt von der Platine zu halten.

Beispielsweise kann ein seitliches Verdrehen oder Verfahren von Platinen auf dem Rollgang eines Rollenherdofens als Ofenvorrichtung vorkommen. Falls dadurch die Platinen nicht in der gewünschten Position unter die Temperiereinheit (auch Tailored Tempering Einheit genannt) fahren, kann der Versatz oder die Verdrehung mit dem Sensor entweder im Ofen oder am Ausgaberolltisch erkannt werden und automatisiert mit Hilfe der magnetischen Ansteuerung jedes Temperierelements ausgeglichen werden. Somit ist keine Zentrierung der Platinen im heißen Bereich nötig. Ferner kann der Temperierkörper mit Temperierstiften automatisch befüllt werden.

Gemäß einem weiteren Aspekt der vorliegenden Erfindung weist das Temperiersystem zumindest zwei Temperiereinheiten auf, welche entsprechend der oben beschriebenen Temperiereinheiten ausgebildet sein kann. Die zumindest zwei Temperiereinheiten sind lösbar miteinander befestigbar. Beispielsweise können somit mehrere Temperiereinheiten lösbar miteinander, beispielsweise über Schraubenverbindungen, miteinander befestigt werden. Entsprechend kann je nach Anforderungsprofil der Platine bzw. der temperierenden Temperierzone der Platine eine beliebige Vielzahl von Temperiereinheiten angeordnet werden. Ist es beispielsweise erforderlich, eine große Temperierzone zu Temperieren, können mehrere Temperiereinheiten mit entsprechenden Temperierkörpern und Temperierstiften aneinander gekoppelt werden. Somit kann ein modulares Temperiersystem geschaffen werden, welches flexibel auf die notwendigen Anforderungen an die Temperierzone angepasst werden kann.

Diesbezüglich weist die Temperiereinheit ferner eine Befestigungsvorrichtung auf, mittels welchen eine Temperiereinheit lösbar an ein Ofengehäuse, insbesondere an einen oberen Beckenbereich des Ofengehäuses im Inneren des Ofenraums gekoppelt werden kann. Beispielsweise kann die Temperiereinheit an dem Ofengehäuse eingehängt und/oder mit diesem verschraubt werden. Somit besteht die Möglichkeit, dass selbst bereits bestehende Ofenvorrichtungen mit der erfindungsgemäßen Temperiereinheit nachgerüstet werden können. Zudem kann die Ofenvorrichtung mit der Temperiereinheit an verschiedene Größen der zu temperierenden Temperierzone angepasst werden. Die Steuerdaten zum Steuern der Temperiereinheit können beispielsweise drahtgebunden oder drahtlos übertragen werden. Entsprechend kann beispielsweise die Steuereinheit außerhalb des Ofengehäuses angeordnet werden, wobei beispielsweise der Temperierkörper, die Temperierstifte und der Steuermechanismus im Inneren des Ofengehäuses angeordnet sind.

Der Einbau oder Nachrüstung der Temperiereinheit in bestehende Anlagen oder bestehende Ofenzonen oder durch Ersetzen der bestehenden Zonen durch neue Zone wird mit der modularen Temperiereinheit ermöglicht. Ein Einbau einer Temperiereinheit kann über Ofendeckel oder Ofenstopfen an der Seite des Ofengehäuses ohne eine Vergrößerung der Anlagenlänge bereitgestellt werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung einer Temperiereinheit in einer Ofenvorrichtung gemäß einer beispielhaften Ausführungsform der vorliegenden Erfindung,
Fig. 2 eine schematische Schnittdarstellung eines Temperierkörpers gemäß einer beispielhaften Ausführungsform der vorliegenden Erfindung,
Fig. 3 eine schematische Darstellung eines Temperierkörpers gemäß einer beispielhaften Ausführungsform der vorliegenden Erfindung, und
Fig. 4 und Fig. 5 schematische Darstellungen einer Temperiereinheit mit einer Steuerplatte in einer Ofenvorrichtung gemäß einer beispielhaften Ausführungsform der vorliegenden Erfindung, und
Fig. 6 eine schematische Darstellung eines Temperierkörpers mit einem Isolierelement gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

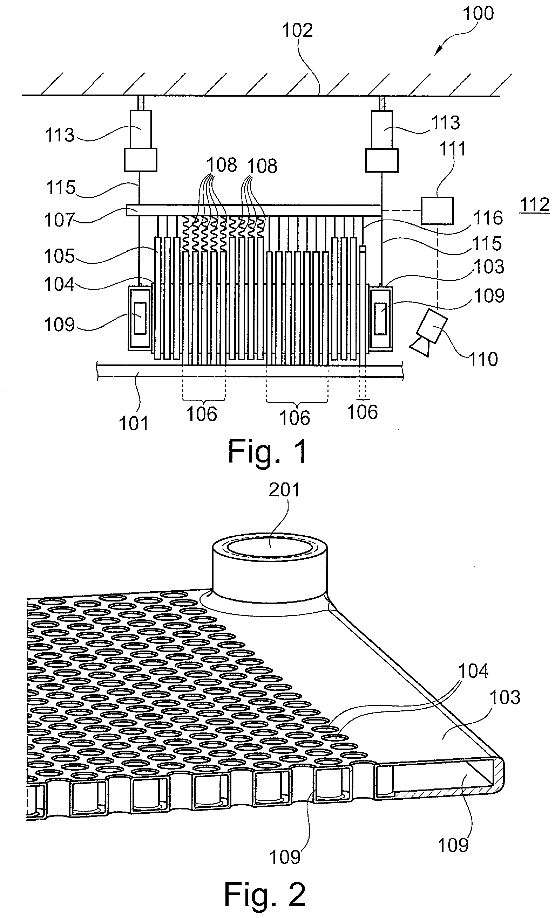

**Fig. 1** zeigt eine schematische Darstellung einer Temperiereinheit in einer Ofenvorrichtung 100 gemäß einer beispielhaften Ausführungsform der vorliegenden Erfindung. Die Temperiereinheit ist zum Wärmebehandeln einer Platine 101, insbesondere einer Metallplatine 101, eingerichtet. Die Temperiereinheit weist einen Temperierkörper auf, welcher in einem Ofenraum 112 der Ofenvorrichtung 100 anordbar ist. Der Temperierkörper 103 weist eine Vielzahl von Aufnahmebohrungen 104 auf. Ferner weist die Temperiereinheit eine Vielzahl von Temperierstiften 105 auf, wobei die Temperierstifte 105 relativ zu dem Temperierkörper 103 beweglich in den Aufnahmebohrungen 104 gelagert sind. Die Temperierstifte 105 sind derart steuerbar, dass eine Temperiergruppe 106 der Temperierstifte 105 aus dem Temperierkörper 103 in Richtung Platine 101 ausfahrbar ist, damit ein thermischer Kontakt zwischen der Temperiergruppe 106 an Temperierstiften 105 mit einer vorbestimmten Temperierzone der Platine 101 generierbar ist.

Die Ofenvorrichtung 100 ist zum Erhitzen der Platine 101 ausgebildet. Die Platine 101 wird in der Ofeneinrichtung 100 auf eine gewünschte Temperatur, z.B. auf Austenitisierungstemperatur, erwärmt oder abgekühlt. Die Ofenvorrichtung 100 weist den Ofenraum 112 oder eine Vielzahl verschiedener Ofenräume 112 auf. In jedem Ofenraum 112 kann beispielsweise eine bestimmte Temperatur eingestellt werden, so dass die Platine 101 in jedem der Ofenräume 112 einer bestimmten Temperatur zum Erhitzen oder zum Abkühlen ausgesetzt ist. Die Ofenvorrichtung 100 kann insbesondere derart ausgebildet sein, dass ein vorbestimmtes, zeitlich veränderbares Temperaturprofil in dem Ofenraum 112 eingestellt werden kann. Das Temperaturprofil wirkt auf die Platine 101 ein, während sich diese in dem Ofenraum 112 des Ofengehäuses 102 der Ofenvorrichtung 100 befindet. In dem Ofenraum 112 können beispielsweise Heizelemente oder Kühlelemente angeordnet werden, um ein gewünschtes Temperaturprofil in dem Ofenraum 112 einzustellen, so dass die Platine 101 gezielt erwärmt, abgekühlt oder temperaturgleich gehalten wird.

Eine vorbestimmte Temperierzone der Platine 101 wird mit einer Temperiergruppe 106 an Temperierstiften 105 gezielt temperiert, d. h. erwärmt oder gekühlt, werden, um die gewünschten Gefügebereiche in der Temperierzone einzustellen. Dabei können insbesondere vorbestimmte Temperierzonen der Platine 101 langsam der schnell abgekühlt werden, indem beispielsweise die Temperiergruppe 106 der Temperierstifte 105 in thermischen Kontakt mit einem vorbestimmten Oberflächenbereich (Temperierzone) der Platine 101, welcher abgekühlt oder erwärmt werden soll, gebracht wird.

In Fig. 1 sind zur besseren Übersicht nicht alle Temperierstifte 105 und Aufnahmebohrungen 104 mit Bezugszeichen versehen worden.

Der Temperierkörper 103 weist entsprechend eine Vielzahl von Aufnahmebohrungen 104 auf, in welche jeweils einer der Temperierstifte 105 einbringbar ist. In Abhängigkeit von der Temperierzone der Platine 101, d.h. desjenigen Bereichs, welcher von den Temperierstiften 105 temperiert werden soll, können bestimmte Temperierstifte 105 zu der Temperiergruppe 106 zusammengefasst werden und in Richtung Platine 101 verfahren werden. Die Temperierstifte 105 der Temperiergruppe 106 können somit zwischen einer ersten Position und einer zweiten Position derart bewegbar angeordnet sein, dass die Temperierstifte 105 der Temperiergruppe 106 in der ersten Position entfernt von der Platine 101 ohne thermischen Kontakt mit der Platine 101 vorliegen und in der zweiten Position mit der Platine 101 in thermischen Kontakt vorliegen. Die Temperierstifte 105, welche nicht der Temperiergruppe 106 zugehörig sind, werden nicht verfahren und bleiben in der ersten Position, d. h. beabstandet von der Platine 101. Die Temperierstifte 101 können direkt auf der Oberfläche der Platine 101 aufliegen. Erhebungen der Kontur der Oberfläche der Platine 101 verschieben die entsprechenden Temperierstifte 105 in Richtung Temperierkörper 101 und Vertiefungen in der Kontur der Oberfläche der Platine 101 verschieben die entsprechenden Temperierstifte 105 von dem Temperierkörper 103 fort. Somit können selbst bei einer unebenen Ausführung der Platine 101 die Temperierstifte 105 auf der Oberfläche der Platine 100 aufliegen.

Die Temperierstifte 105 der Temperiergruppe 106 sind derart verschiebbar in den jeweiligen Aufnahmebohrungen 104 des Temperierkörpers 103 angeordnet, dass die Temperierstifte 105 in der zweiten Position auf einer Oberfläche der Platine 101 auflegbar sind und an eine Kontur der Oberfläche der Platine 101 anpassbar sind.

Die Temperiergruppe 106 kann flexibel erweitert bzw. geändert und entsprechend an unterschiedliche Temperierzonen der Platine 101 angepasst werden. Diesbezüglich können die Temperierstifte 105 individuell oder gruppenweise gesteuert werden.

Der Temperierkörper 103 weist einen Temperierkanal 109 für ein Temperierfluid zum Temperieren des Temperierkörpers 103 auf. Somit kann der Temperierkörper 103 auf eine gewünschte Temperatur temperiert werden. Der Temperierkörper 103 steht in thermischen Kontakt mit den Temperierstiften 105, sodass diese mittels des Temperierkörpers 103 auf eine gewünschte Temperatur eingestellt werden können.

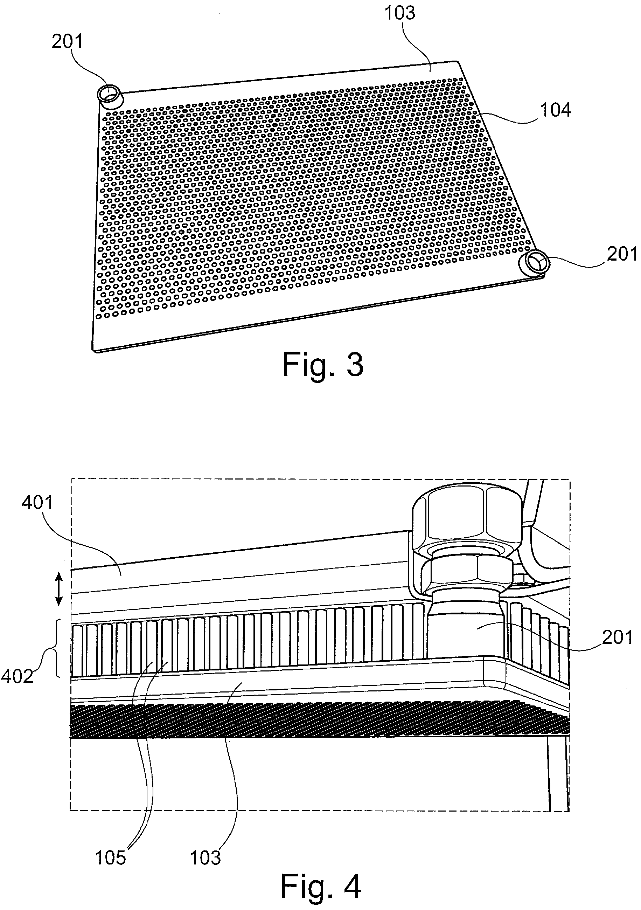

Der Temperierkörper 103 kann beispielsweise über eine Befestigungsvorrichtung 113 an dem Ofengehäuse 102 befestigt werden. An dem Befestigungselement 113 beispielsweise über Aufhängungen 115 ein Steuermechanismus 107, eine Steuerplatte 401 (siehe Fig. 4) und der Temperierkörper 103 gelagert.

Die Temperiereinheit kann ferner mittels der Befestigungsvorrichtung 113 lösbar an das Ofengehäuse 102, insbesondere an einen oberen Beckenbereich des Ofengehäuses 102 im Inneren des Ofenraums 112 gekoppelt werden. Beispielsweise kann die Temperiereinheit an dem Ofengehäuse 102 eingehängt und/oder mit diesem verschraubt werden.

Die Temperiereinheit weist ferner den Steuermechanismus 107 auf, welcher derart mit dem Temperierkörper 103 gekoppelt ist, dass ausschließlich die Temperierstifte 105 der Temperiergruppe 106 aus dem Temperierkörper 103 in Richtung Platine 101 ausfahrbar sind. Beispielsweise kann jedem Temperierstift 105 ein Steuerelement 116 bzw. Steuermotor, welcher pneumatische, elektromagnetisch oder elektronisch den Temperierstift 105 antreibt, zugeordnet werden. Somit kann über die Steuerung der einzelnen Temperierstifte 105 eine gewünschte Temperiergruppe 106 gebildet werden, welche der Temperierzone der Platine 101 entspricht.

Der Steuermechanismus 107 kann beispielsweise einen Magnetmechanismus aufweisen, welcher konfiguriert ist, ein magnetisches Feld zu generieren, welches indikativ zu der Form der Temperierzone der Platine 101 entspricht. Der Magnetmechanismus ist derart mit dem Temperierkörper 103 gekoppelt, dass aufgrund des magnetischen Feldes ausschließlich die Temperiergruppe 106 der Temperierstifte 105 aus dem Temperierkörper 103 in Richtung Platine 101 ausfahrbar ist.

Der Temperierkörper 103 ist derart angeordnet, dass die Temperierstifte 105 schwerkraftbasiert in Richtung Platine 101 ausfahrbar sind. Das magnetische Feld ist derart ausgebildet, dass auf die Temperierstifte 105, welche nicht der Temperiergruppe 106 zugehörig sind, eine magnetische Rückhaltekraft wirkt, so dass ausschließlich die Temperierstifte 105 der Temperiergruppe 106 ausfahrbar sind.

Die Temperiereinheit weist ferner eine Vielzahl von Rückstellfedern 108 auf, welche derart eingerichtet sind, dass eine Rückstellfeder 108 einem Temperierstift 105 zugeordnet ist und derart mit diesem gekoppelt ist, dass der entsprechende Temperierstift 105 mittels der Rückstellfeder 108 in einer Position entfernt von der Platine 101 fixierbar ist. Mit anderen Worten werden Druck oder Zugfedern eingesetzt, deren Federkraft in eine Richtung von der Platine 101 in Richtung Temperierkörper 103 wirkt, um die Temperierstifte 105 von der Platine 101 fortzuhalten. Zur besseren Übersichtlichkeit ist nur an manchen Temperierstifte 105 eine entsprechende Rückstellfeder 108 eingezeichnet. Insbesondere können alle Temperierstifte 105 mit entsprechenden Rückstellfeder an 108 ausgestattet sein.

Ferner ist eine Steuereinheit 111 vorgesehen, welche konfiguriert ist, Positionsdaten der Platine 101 zu erhalten. Die Steuereinheit 111 kann basierend auf den Positionsdaten die Temperierstifte 105 der Temperiergruppe 106 auszuwählen, um basierend auf einer aktuellen Position der Platine 101 die Temperierzone der Platine 101 zu generieren.

Beispielsweise über Sensoren 110, wie Kameraeinrichtungen, Distanzsensoren (zum Beispiel Ultraschallsensoren) und/oder Infrarotsensoren, kann die exakte Position der Platine 101 in der Ofenvorrichtung 100 bestimmt werden.

Basierend auf diesen Positionsdaten kann die Steuereinheit 111 die IstPosition der gewünschten Temperierzone der Platine 101 bestimmen. Darauf basierend bestimmt die Steuereinheit 111 die Temperierstifte 105, welche die Temperiergruppe 106 bilden sollen. Basierend darauf steuert die Steuereinrichtung die Steuerplatte 401 (siehe Fig. 4) und/oder den Steuermechanismus 107, um gezielt die Temperierstifte 105 der Temperiergruppe 106 in Richtung Platine zu verfahren und die Temperierstifte 105, welche nicht der Temperiergruppe 106 angehören, entfernt von der Platine 101 zu halten.

**Fig. 2** zeigt eine schematische Schnittdarstellung des Temperierkörpers 103.

**Fig. 3** zeigt eine perspektivische Ansicht des Temperierkörpers 103 aus Fig. 2. Der Temperierkörper 103 weist insbesondere eine hohe Wärmespeicherkapazität auf, so dass dieser eine Temperierung (Erwärmung oder Abkühlung) der Temperierstifte 105 durchführen kann. Der Temperierkörper 103 kann austauschbar in dem Ofenraum 112 angeordnet werden und/oder mittels einer Kühl- oder Heizeinrichtung (d.h. einer Temperiereinrichtung) versehen werden. Der Temperierkörper 103 ist wie in Fig. 2 dargestellt ein Hohlkörper, welcher mit einem Kühlmedium oder Heizmedium gefüllt ist. Das Hohlprofil bildet somit ein inneres Temperiervolumen bzw. den Temperierkanal 109.

Die Aufnahmebohrungen 104 können in vorbestimmten Reihen und Spalten in dem Temperierkörper 103 angeordnet werden. Der Temperierkanal 109 führt um die Aufnahmebohrung 104 herum. Über einen Fluidanschluss 201 kann der Temperierkanal bzw. das Temperiervolumen in dem Temperierkörper 103 mit dem Fluid befüllt und entleert werden. Es kann eine Flüssigkeitskühlung/- erwärmung des Temperierkörpers 103 umgesetzt werden, so dass permanent die Temperierstifte 105, welche sich in thermischen Kontakt mit dem Temperierkörper 103 befinden, temperiert werden.

Wie in Fig. 2 dargestellt weist der Temperierkörper 103 ein komplexes Hohlprofil auf, in welchen jede Aufnahmebohrung 104 von dem Temperierkanal 109 umgeben wird, sodass ein Temperiermedium die Aufnahmebohrungen 104 umspülen kann. Ein entsprechend hochkomplexes Hohlprofil des Temperierkörpers 103 wird erfindungsgemäß insbesondere mittels Additiven Herstellverfahren bereitgestellt.

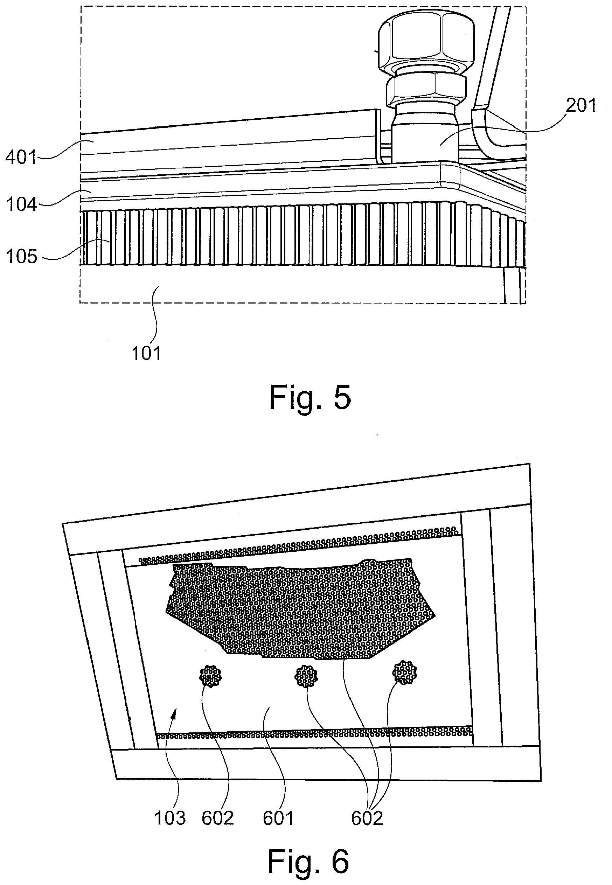

**Fig. 4** und **Fig. 5** zeigen schematische Darstellungen einer Temperiereinheit mit einer Steuerplatte 401 in einer Ofenvorrichtung 100 gemäß einer beispielhaften Ausführungsform der vorliegenden Erfindung.

An der Steuerplatte 401 sind die Temperierstifte 105 gekoppelt sind. Die Steuerplatte 401 ist an einer der Platine 101 abgewandten Seite des Temperierkörpers 103 angeordnet. Die Steuerplatte 401 ist relativ zu dem Temperierkörper 103 beweglich derart angeordnet, dass die Steuerplatte 401 die Temperierstifte 105 (insbesondere ausschließlich die Temperierstifte 105 der Temperiergruppe 106) durch die Aufnahmebohrungen 104 des Temperierkörpers 103 bewegt.

An der Steuerplatte 401 können die Temperierstifte 105 fixiert werden, sodass die Steuerplatte 401 bei Bewegung in Richtung Temperierkörper 103 die Temperierstifte 105 durch die Aufnahmebohrungen 104 in Richtung Platine 101 hindurchschiebt oder bei Bewegung entgegen der Richtung des Temperierkörpers 103 die Temperierstifte 105 von der Platine 101 entfernt.

Die Steuerplatte 401 weist Durchgangsbohrungen auf, in welchen die Temperierstifte 105 verschiebbar gelagert sind. Die Temperierstifte 105 weisen jeweils einen Stiftkopf auf, welcher einen größeren Durchmesser als die entsprechende Durchgangsbohrung aufweist, in welcher der entsprechende Temperierstift 105 eingesteckt ist. Die Temperierstifte 105 sind derart in den entsprechenden Durchgangsbohrungen eingesteckt, dass ein Herausfallen in Richtung Temperierkörper 103 mittels der Stiftköpfe versperrt sind. Die Temperiereinheit ist derart ausgerichtet, dass sich die Temperierstifte 105 aufgrund der Schwerkraft in Richtung Platine 101 bewegen, bis der Stiftkopf auf der Steuerplatte 401 aufliegt und ein weiteres verfahren des Temperierstifts 105 in Richtung Platine 101 gestoppt wird. Erfährt der Temperierstift 105 eine Druckkraft entgegen der Schwerkraftrichtung, beispielsweise aufgrund einer Erhebung auf der Platine 101 oder aufgrund eines Rückhaltemechanismus (z.B. die Rückstellfedern 108) bzw. aufgrund einer Verriegelung einer zugehörigen Aufnahmebohrung 104 in dem Temperierkörper 103, so kann sich dennoch der Temperierstift 105 entgegen der Schwerkraftrichtung relativ zu der Steuerplatte 401 bewegen.

Beispielsweise können bestimmte Aufnahmebohrungen 104 des Temperierkörpers 103 gezielt verschlossen werden, sodass nur die Temperierstifte 105 der Temperiergruppe 106 durch die nicht verschlossenen Aufnahmebohrungen 104 durchgeführt werden können. In diesem Fall kann sich beispielsweise die Steuerplatte 401 in Richtung Schwerkraftrichtung bzw. in Richtung Temperierkörper 103 bewegen, sodass die Temperierstifte 105 der Temperiergruppe 106 durch den Temperierkörper 103 in Richtung Platine 101 verfahren werden, während die anderen Temperierstifte 105 außerhalb der Temperiergruppe 106 auf dem Temperierkörper 103 aufliegen und nicht in Richtung Platine 101 verfahren werden. Das Verschließen der Aufnahmebohrungen 104 kann beispielsweise durch eine Steuerschablone bereitgestellt werden. Die Steuerschablone weist ein vorbestimmtes Muster an Durchgangsöffnungen für die Temperierstifte 105 der Temperiergruppe 106 auf, wobei das Muster an Durchgangsöffnungen indikativ für die Temperierzone der Platine 101 ist.

Die Steuerplatte 401 ist ferner beabstandet zu dem Temperierkörper 103 derart verfahrbar, dass zwischen der Steuerplatte 401 und dem Temperierkörper 103 ein Zwischenraum 401 gebildet ist, in welchen zumindest ein Teil der Temperierstifte 105 vorliegen. In dem Zwischenraum 401 ist ein Temperierfluid zum Temperieren des Teils der Temperierstifte 105 einbringbar.

**Fig. 6** zeigt eine schematische Darstellung eines Temperierkörpers 103 mit einem Isolierelement 601 gemäß einer beispielhaften Ausführungsform der vorliegenden Erfindung. Das Isolierelement 601 ist an dem Temperierkörper derart angeordnet, dass ein Bereich des Temperierkörpers 103, aus welchen die Temperierstifte 105 der Temperiergruppe 106 aus dem Temperierkörper 103 in Richtung Platine 101 ausfahrbar sind bzw. sein sollen, frei von dem Isolierelement 601 bleibt. Das Isolierelement 601 isoliert den Temperierkörper thermisch von der Platine 101 in den Bereichen, in welchen ein thermischer Kontakt zwischen Temperierkörper 103/Temperierstifte 105 und Platine 101 (bzw. Temperierzone) gewünscht ist.

Das Isolierelement 601 ist derart an dem Temperierkörper 103 angeordnet, dass das Isolierelement 601 die Aufnahmebohrungen 104 des Temperierkörpers 103, in welchen Temperierstifte 105 vorliegen, die nicht zu der Temperiergruppe 106 der Temperierstifte 105 gehören, abdeckt, um ein Verfahren der entsprechenden Temperierstifte 105 in Richtung Platine zu versperren. Das Isolierelement 601 fungiert somit entsprechend einer Steuerschablone.

Das Isolierelement 601 als Steuerschablone weist ein vorbestimmtes Muster an Durchgangsöffnungen für die Temperierstifte 105 der Temperiergruppe 106 auf, wobei das Muster an Durchgangsöffnungen indikativ für die Temperierzone der Platine 101 ist (d. h. eine Projektion des Musters an Durchgangsöffnungen auf der Platine ergibt die Temperierzone). Die Steuerschablone ist mit einer vorbestimmten Orientierung an dem Temperierkörper 103 angeordnet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Ofenvorrichtung
- 101: Metallplatine
- 102: Ofengehäuse
- 103: Temperierkörper
- 104: Aufnahmebohrung
- 105: Temperierstift
- 106: Temperiergruppe
- 107: Steuermechanismus
- 108: Rückstellfeder
- 109: Temperierkanal
- 110: Sensor
- 111: Steuereinheit
- 112: Ofenraum
- 113: Befestigungsvorrichtung
- 114: Aufhängung
- 115: Steuerelement
- 201: Fluidanschluss
- 401: Steuerplatte
- 402: Zwischenraum
- 601: Isolierelement
- 602: unbedeckte Aufnahmebohrungen

## Patentansprüche

1. Temperiereinheit für eine Ofenvorrichtung (100) zum Wärmebehandeln einer Platine (101), insbesondere einer Metallplatine (101), die Temperiereinheit aufweisend
einen Temperierkörper (103), welcher in einem Ofenraum (113) der Ofenvorrichtung (100) anordbar ist,
wobei der Temperierkörper (103) eine Vielzahl von Aufnahmebohrungen (104) aufweist, und
eine Vielzahl von Temperierstiften (105),
wobei die Temperierstifte (105) relativ zu dem Temperierkörper (103) beweglich in den Aufnahmebohrungen (104) gelagert sind und zwischen einer ersten Position, in welcher die Temperierstifte (105) beabstandet von der Platine vorliegen, und einer zweiten Position, in welcher die Temperierstifte (105) mit der Platine in thermischen Kontakt stehen bewegbar sind,
wobei der Temperierkörper (103) in thermischen Kontakt mit den Temperierstiften (105) steht, sodass diese mittels des Temperierkörpers (103) auf eine Temperatur einstellbar sind,
**dadurch gekennzeichnet, dass** die Temperierstifte (105) derart steuerbar sind, dass eine Temperiergruppe (106) der Temperierstifte (105) aus dem Temperierkörper (103) in Richtung Platine (101) in die zweite Position ausfahrbar ist, damit ein thermischer Kontakt zwischen der Temperiergruppe (106) an Temperierstiften (105) mit einer vorbestimmten Temperierzone der Platine (101) generierbar ist,
und dass die Temperierstifte (105), welche nicht der Temperiergruppe (106) zugehörig sind, in der ersten Position bleiben.

2. Temperiereinheit gemäß Anspruch 1,
wobei der Temperierkörper (103) einen Temperierkanal (109) für ein Temperierfluid zum Temperieren des Temperierkörpers (103) aufweist.

3. Temperiereinheit gemäß Anspruch 1 oder 2,
wobei der Temperierkörper (103) mittels additiver Fertigung hergestellt ist.

4. Temperiereinheit gemäß einem der Ansprüche 1 bis 3,
wobei der Temperierkörper (103) Hülsen aufweist, welche in den Aufnahmebohrungen (104) angeordnet sind.

5. Temperiereinheit gemäß einem der Ansprüche 1 bis 4,
wobei die Temperierstifte (105) eine zylindrische Form mit einer kreisförmigen, elliptischen oder polygonen, insbesondere viereckigen, Grundfläche aufweist.

6. Temperiereinheit gemäß einem der Ansprüche 1 bis 5,
wobei zumindest zwei der Temperierstifte (105) sich in ihrem Durchmesser unterscheiden,
wobei insbesondere zumindest zwei der Aufnahmebohrungen (104) sich in ihrem Durchmesser unterscheiden.

7. Temperiereinheit gemäß einem der Ansprüche 1 bis 6,
wobei sich die Dichte von Aufnahmebohrungen (104) in einem ersten Bereich des Temperierkörpers (103) von einer Dichte von Aufnahmebohrungen (104) in einem zweiten Bereich des Temperierkörpers (103) unterscheidet.

8. Temperiereinheit gemäß einem der Ansprüche 1 bis 7, ferner aufweisend
eine Steuerplatte (401), an welcher die Temperierstifte (105) gekoppelt sind,
wobei die Steuerplatte (401) an einer der Platine (101) abgewandten Seite des Temperierkörpers (103) angeordnet ist,
wobei die Steuerplatte (401) relativ zu dem Temperierkörper (103) beweglich derart angeordnet ist, dass die Steuerplatte (401) die Temperierstifte (105) durch die Aufnahmebohrungen (104) des Temperierkörpers (103) bewegt,
wobei die Steuerplatte (401) insbesondere Durchgangsbohrungen aufweist, in welchen die Temperierstifte (105) verschiebbar gelagert sind,
wobei die Temperierstifte (105) jeweils einen Stiftkopf aufweisen, welcher einen größeren Durchmesser als die entsprechende Durchgangsbohrung aufweist, in welcher der entsprechende Temperierstift (105) eingesteckt ist,
wobei die Temperierstifte (105) derart in den entsprechenden Durchgangsbohrungen eingesteckt sind, dass ein Herausfallen in Richtung Temperierkörper (103) mittels der Stiftköpfe versperrt ist,
wobei die Steuerplatte (401) insbesondere beabstandet zu dem Temperierkörper (103) derart verfahrbar ist, dass zwischen der Steuerplatte (401) und dem Temperierkörper (103) ein Zwischenraum (402) gebildet ist, in welchen zumindest ein Teil der Temperierstifte (105) vorliegen,
wobei in dem Zwischenraum (402) ein Temperierfluid zum Temperieren des Teils der Temperierstifte (105) einbringbar ist.

9. Temperiereinheit gemäß einem der Ansprüche 1 bis 8, ferner aufweisend ein Isolierelement (601) zum thermischen Isolieren des Temperierkörpers (103) von der Platine (101),
wobei das Isolierelement (601) an dem Temperierkörper (103) derart angeordnet ist, dass ein Bereich des Temperierkörpers (103), aus welchen die Temperierstifte (105) der Temperiergruppe (106) aus dem Temperierkörper in Richtung Platine (101) ausfahrbar sind, frei von dem Isolierelement (601) bleibt oder indem die Temperierstifte durch Bohrungen durch das Isoliermaterial verfahren wobei insbesondere das Isolierelement (601) derart an dem Temperierkörper (103) angeordnet ist, dass das Isolierelement (601) die Aufnahmebohrungen (104) des Temperierkörpers (103), in welchen Temperierstifte (105) vorliegen, die nicht zu der Temperiergruppe (106) der Temperierstifte (105) gehören, abdeckt, um ein Verfahren der entsprechenden Temperierstifte (105) in Richtung Platine (101) zu versperren.

10. Temperiereinheit gemäß einem der Ansprüche 1 bis 9, ferner aufweisend
eine Steuerschablone,
wobei die Steuerschablone ein vorbestimmtes Muster an Durchgangsöffnungen für die Temperierstifte (105) der Temperiergruppe (106) aufweist,
wobei das Muster an Durchgangsöffnungen indikativ für die Temperierzone der Platine (101) ist,
wobei die Steuerschablone mit einer vorbestimmten Orientierung an dem Temperierkörper (103) derart angeordnet ist, dass aufgrund des Musters an Durchgangsöffnungen ausschließlich die Temperierstifte (105) der Temperiergruppe (106) durch die Durchgangsöffnungen der Steuerschablone sowie durch die Aufnahmebohrungen (104) des Temperierkörpers (103) durchführbar sind, um den thermischen Kontakt zwischen den Temperierstiften (105) der Temperiergruppe (106) mit der Temperierzone der Platine (101) zu generieren,
wobei die Steuerschablone insbesondere austauschbar an dem Temperierkörper (103) anbringbar ist,
wobei insbesondere der Temperierkörper (103) zwei gegenüberliegende Führungsleisten aufweist, zwischen welchen die Steuerschablone schubladenartig einschiebbar und fixierbar ist,
wobei insbesondere der Temperierkörper (103) einen inneren Hohlraum aufweist, in welchen die Steuerschablone einschiebbar und fixierbar ist.

11. Temperiereinheit gemäß einem der Ansprüche 1 bis 10, ferner aufweisend
einen Steuermechanismus (107), welcher derart mit dem Temperierkörper (103) gekoppelt ist, dass ausschließlich die Temperierstifte (105) der Temperiergruppe (106) aus dem Temperierkörper (103) in Richtung Platine (101) ausfahrbar sind,
wobei insbesondere der Steuermechanismus (107) ein Magnetmechanismus aufweist, welcher konfiguriert ist, ein magnetisches Feld zu generieren, welches indikativ zu der Form der Temperierzone der Platine (101) entspricht,
wobei der Magnetmechanismus derart mit dem Temperierkörper (103) gekoppelt ist, dass aufgrund des magnetischen Feldes ausschließlich die Temperiergruppe (106) der Temperierstifte (105) aus dem Temperierkörper (103) in Richtung Platine (101) ausfahrbar ist,
wobei insbesondere der Temperierkörper (103) derart anordbar ist, dass die Temperierstifte (105) schwerkraftbasiert in Richtung Platine (101) ausfahrbar sind,
wobei das magnetische Feld derart ausgebildet ist, dass auf die Temperierstifte (105), welche nicht der Temperiergruppe (106) zugehörig sind, eine magnetische Rückhaltekraft einwirkbar ist, so dass ausschließlich die Temperierstifte (105) der Temperiergruppe (106) ausfahrbar sind.

12. Temperiereinheit gemäß Anspruch 11, ferner aufweisend
eine Vielzahl von Rückstellfedern (108), welche derart eingerichtet sind, dass eine Rückstellfeder (108) einem Temperierstift (105) zugeordnet ist und derart mit diesem gekoppelt ist, dass der entsprechende Temperierstift (105) mittels der Rückstellfeder (108) in einer Position entfernt von der Platine (101) fixierbar ist.

13. Temperiereinheit gemäß Anspruch 11 oder 12, ferner aufweisend
eine Steuereinheit (111),
wobei die Steuereinheit (111) konfiguriert ist, Positionsdaten der Platine (101) zu erhalten,
wobei die Steuereinheit (111) ferner konfiguriert ist, basierend auf den Positionsdaten die Temperierstifte (105) der Temperiergruppe (106) auszuwählen, um basierend auf einer aktuellen Position der Platine (101) die Temperierzone der Platine (101) zu generieren.

14. Ein Temperiersystem zum Temperieren einer Temperierzone der Platine (101), wobei das Temperiersystem aufweist,
zumindest zwei Temperiereinheiten gemäß einem der Ansprüche 1 bis 13, wobei die zumindest zwei Temperiereinheiten lösbar miteinander befestigbar sind.

15. Verfahren zum Betreiben einer Temperiereinheit für eine Ofenvorrichtung (100) zum Wärmebehandeln einer Platine (101), insbesondere einer Metallplatine (101), das Verfahren aufweisend
Steuern von Temperierstiften (105) derart, dass eine Temperiergruppe (106) der Temperierstifte (105) aus einem Temperierkörper (103) in Richtung Platine (101) in eine zweite Position ausgefahren wird, damit ein thermischer Kontakt zwischen der Temperiergruppe (106) an Temperierstiften (105) mit einer vorbestimmten Temperierzone der Platine (101) generierbar ist,
wobei der Temperierkörper (103) in thermischen Kontakt mit den Temperierstiften (105) steht, sodass diese mittels des Temperierkörpers (103) auf eine Temperatur einstellbar sind,
wobei der Temperierkörper (103) in einem Ofenraum (113) der Ofenvorrichtung (100) anordbar ist,
wobei der Temperierkörper (103) eine Vielzahl von Aufnahmebohrungen (104) aufweist,
wobei die Temperierstifte (105) relativ zu dem Temperierkörper beweglich in den Aufnahmebohrungen (104) gelagert sind und zwischen einer ersten Position, in welcher die Temperierstifte (105) beabstandet von der Platine vorliegen, und einer zweiten Position, in welcher die Temperierstifte (105) mit der Platine in thermischen Kontakt stehen bewegbar sind,
wobei der Temperierkörper (103) in thermischen Kontakt mit den Temperierstiften (105) steht, sodass diese mittels des Temperierkörpers (103) auf eine Temperatur einstellbar sind, und dass die Temperierstifte (105), welche nicht der Temperiergruppe (106) zugehörig sind, in der ersten Position bleiben.

## Claims

1. A temperature-control unit for a furnace device (100) for heat treating a plate (101), in particular a metal plate (101), the temperature-control unit comprising
a temperature-control body (103), which is arrangeable in a furnace chamber (113) of the furnace device (100),
wherein the temperature-control body (103) has a plurality of receiving bores (104), and
a plurality of temperature-control pins (105),
wherein the temperature-control pins (105) are mounted in the receiving bores (104) so as to be movable relative to the temperature-control body (103) and are movable between a first position, in which the temperature-control pins (105) are present spaced apart from the plate, and a second position, in which the temperature-control pins (105) are in thermal contact with the plate,
wherein the temperature control body (103) is in thermal contact with the temperature-control pins (105), so that they can be adjusted to a temperature by means of the temperature-control body (103),
**characterized in that** the temperature-control pins (105) are controllable in such a way that a temperature-control group (106) of the temperature-control pins (105) is extendable out of the temperature-control body (103) in the direction towards the plate (101) into the second position, so that a thermal contact is generatable between the temperature-control group (106) of temperature-control pins (105) with a predetermined temperature-control zone of the plate (101),
and that the temperature-control pins (105), which do not belong to the temperature-control group (106), remain in the first position.

2. The temperature-control unit according to claim 1, wherein the temperature-control body (103) has a temperature-control channel (109) for a temperature-control fluid for temperature-controlling the temperature-control body (103).

3. The temperature-control unit according to claim 1 or 2, wherein the temperature-control body (103) is manufactured by additive manufacturing.

4. The temperature-control unit according to one of claims 1 to 3,
wherein the temperature-control body (103) has ferrules, which are arranged in the receiving bores (104).

5. The temperature-control unit according to one of claims 1 to 4,
wherein the temperature-control pins (105) have a cylindrical shape with a circular, elliptical, or polygonal, in particular quadrangular, base surface.

6. The temperature-control unit according to one of claims 1 to 5,
wherein at least two of the temperature-control pins (105) differ in their diameter, wherein, in particular, at least two of the receiving bores (104) differ in their diameter.

7. The temperature-control unit according to one of claims 1 to 6,
wherein the density of receiving bores (104) in a first region of the temperature-control body (103) differs from a density of receiving bores (104) in a second region of the temperature-control body (103).

8. The temperature-control unit according to one of claims 1 to 7, further comprising
a control plate (401) to which the temperature-control pins (105) are coupled, wherein the control plate (401) is arranged on a side of the temperature-control body (103) facing away from the plate (101),
wherein the control plate (401) is arranged so as to be movable relative to the temperature-control body (103) in such a way that the control plate (401) moves the temperature-control pins (105) through the receiving bores (104) of the temperature-control body (103),
wherein the control plate (401) has through-bores, in which the temperature-control pins (105) are mounted so as to be displaceable,
wherein the temperature-control pins (105) each have a pin head, which has a larger diameter than the corresponding through-bore, in which the corresponding temperature-control pin (105) is inserted,
wherein the temperature-control pins (105) are inserted in the corresponding through-bores in such a way that a falling out in the direction towards the temperature-control body (103) is blocked by the pin heads,
wherein the control plate (401) is displaceable at a distance from the temperature-control body (103) in such a way that an intermediate space (402) is formed between the control plate (401) and the temperature-control body (103), in which intermediate space (402) at least a part of the temperature-control pins (105) are present,
wherein a temperature-control fluid is introducible into the intermediate space (402) for temperature-controlling the part of the temperature-control pins (105).

9. The temperature-control unit according to one of claims 1 to 8, further comprising an insulation element (601) for thermally insulating the temperature-control body (103) from the plate (101),
wherein the insulation element (601) is arranged at the temperature-control body (103) in such a way that a region of the temperature-control body (103), from which the temperature-control pins (105) of the temperature-control group (106) are extendable out of the temperature-control body in the direction towards the plate (101), remains free from the insulation element (601) or in that the temperature-control pins travel through bores through the insulating material,
wherein, in particular, the insulation element (601) is arranged at the temperature-control body (103) in such a way that the insulation element (601) covers the receiving bores (104) of the temperature-control body (103), in which receiving bores (104) temperature-control pins (105) are present, which do not belong to the temperature-control group (106) of the temperature-control pins (105), in order to block a displacing of the corresponding temperature-control pins (105) in the direction towards the plate (101).

10. The temperature-control unit according to one of claims 1 to 9, further comprising a control template,
wherein the control template has a predetermined pattern of through-holes for the temperature-control pins (105) of the temperature-control group (106),
wherein the pattern of through-holes is indicative for the temperature-control zone of the plate (101),
wherein the control template is arranged at the temperature-control body (103) with a predetermined orientation in such a way that, due to the pattern of through-holes, only the temperature-control pins (105) of the temperature-control group (106) can be passed through the through-holes of the control template as well as through the receiving bores (104) of the temperature-control body (103) in order to generate the thermal contact between the temperature-control pins (105) of the temperature-control group (106) and the temperature-control zone of the plate (101),
wherein the control template is, in particular, exchangeably attachable to the temperature-control body (103),
wherein, in particular, the temperature-control body (103) has two opposite guide rails, between which the control template is insertable and fixable in the manner of a drawer, wherein, in particular, the temperature-control body (103) has an inner cavity, into which the control template is insertable and fixable.

11. The temperature-control unit according to one of claims 1 to 10, further comprising
a control mechanism (107), which is coupled to the temperature-control body (103) in such a way that only the temperature-control pins (105) of the temperature-control group (106) are extendable out of the temperature-control body (103) in the direction towards the plate (101),
wherein, in particular, the control mechanism (107) has a magnetic mechanism, which is configured to generate a magnetic field that is indicative for the shape of the temperature-control zone of the plate (101),
wherein the magnetic mechanism is coupled to the temperature-control body (103) in such a way that, due to the magnetic field, only the temperature-control group (106) of the temperature-control pins (105) is extendable out of the temperature-control body (103) in the direction towards the plate (101),
wherein, in particular, the temperature-control body (103) is arrangeable in such a way that the temperature-control pins (105) are extendable in the direction towards the plate (101) based on gravity,
wherein the magnetic field is formed in such a way that a magnetic retaining force is applicable to the temperature-control pins (105), which do not belong to the temperature-control group (106), so that only the temperature-control pins (105) of the temperature-control group (106) are extendable.

12. The temperature-control unit according to claim 11, further comprising a plurality of return springs (108), which are configured in such a manner that a return spring (108) is associated to a temperature-control pin (105) and is coupled to the latter in such a way that the corresponding temperature-control pin (105) is fixable in a position remote from the plate (101) by the return spring (108).

13. The temperature-control unit according to claim 11 or 12, further comprising a control unit (111),
wherein the control unit (111) is configured to receive position data of the plate (101), wherein the control unit (111) is further configured to select the temperature-control pins (105) of the temperature-control group (106) based on the position data, in order to generate the temperature-control zone of the plate (101) based on a current position of the plate (101).

14. A temperature-control system for temperature-controlling a temperature-control zone of the plate (101), wherein the temperature-control system has at least two temperature-control units according to one of the claims 1 to 13, wherein the at least two temperature-control units are releasably fixable to one another.

15. A method for operating a temperature-control unit for a furnace device (100) for heat treating a plate (101), in particular a metal plate (101), the method comprising
controlling temperature-control pins (105) in such a way that a temperature-control group (106) of the temperature-control pins (105) is extended out of a temperature-control body (103) in the direction towards the plate (101) so that a thermal contact between the temperature-control group (106) on temperature-control pins (105) and a predetermined temperature-control zone of the plate (101) can be generated, wherein the temperature control body (103) is in thermal contact with the temperature-control pins (105), so that they can be adjusted to a temperature by means of the temperature-control body (103),
wherein the temperature-control body (103) can be arranged in a furnace chamber (113) of the furnace device (100),
wherein the temperature-control body (103) comprises a plurality of receiving bores (104),
wherein the temperature-control pins (105) are mounted in the receiving bores (104) so as to be movable relative to the temperature-control body and are movable between a first position, in which the temperature-control pins (105) are present spaced apart from the plate, and a second position, in which the temperature-control pins (105) are in thermal contact with the plate,
wherein the temperature control body (103) is in thermal contact with the temperature-control pins (105), so that they can be adjusted to a temperature by means of the temperature-control body (103), and that the temperature-control pins (105), which do not belong to the temperature-control group (106), remain in the first position.

## Revendications

1. Unité de régulation de température pour un dispositif de four (100) pour le traitement thermique d'une platine (101), plus particulièrement d'une platine métallique (101), cette unité de régulation de température comprenant
un corps de régulation de température (103) qui peut être disposé dans un espace de four (113) du dispositif de four (100),
dans lequel le corps de régulation de température (103) comprend une pluralité de perçages de logement (104) et
une pluralité de tiges de régulation de température (105),
dans lequel les tiges de régulation de température (105) sont logées, de manière mobile par rapport au corps de régulation de température (103), dans les perçages de logement (104), et peuvent être déplacées entre une première position, dans laquelle les tiges de régulation de température (105) sont distantes de la platine, et une deuxième position, dans laquelle les tiges de régulation de température (105) sont en contact thermique avec la platine,
dans lequel le corps de régulation de température (103) est en contact thermique avec les tiges de régulation de température (105) de façon à ce que celles-ci puissent être ajustées à une température au moyen du corps de régulation de température (103), **caractérisée en ce que**
les tiges de régulation de température (105) peuvent être contrôlées de façon à ce qu'un groupe de régulation de température (106) des tiges de régulation de température (105) puissent être déplacées hors du corps de régulation de température (103) en direction de la platine (101) vers la deuxième position, afin d'établir un contact thermique entre le groupe de régulation de température (106) de tiges de régulation de température (105) avec une zone de régulation de température prédéterminée de la platine (101),
et **en ce que** les tiges de régulation de température (105), qui ne font pas partie du groupe de régulation de température (106) restent dans la première position.

2. Unité de régulation de température selon la revendication 1,
dans laquelle le corps de régulation de température (103) comprend un canal de régulation de température (109) pour un fluide de régulation de température du corps de régulation de température (103).

3. Unité de régulation de température selon la revendication 1 ou 2,
dans laquelle le corps de régulation de température (103) est fabriqué par fabrication additive.

4. Unité de régulation de température selon l'une des revendications 1 à 3,
dans laquelle le corps de régulation de température (103) comprend des manchons qui sont disposés dans des perçages de logement (104).

5. Unité de régulation de température selon l'une des revendications 1 à 4,
dans laquelle les tiges de régulation de température (105) présentent une forme cylindrique avec une surface de base circulaire, elliptique ou polygonale, plus particulièrement quadrangulaire.

6. Unité de régulation de température selon l'une des revendications 1 à 5,
dans laquelle au moins deux des tiges de régulation de température (105) se distinguent par leur diamètre,
dans laquelle, plus particulièrement, au moins deux des perçages de logement (104) se distinguent par leur diamètre.

7. Unité de régulation de température selon l'une des revendications 1 à 6,
dans laquelle la densité des perçages de logement (104) se distingue, dans une première zone du corps de régulation de température (103), de la densité des perçages de logement (104) dans une deuxième zone du corps de régulation de température (103).

8. Unité de régulation de température selon l'une des revendications 1 à 7, comprenant en outre
une plaque de commande (401) à laquelle les tiges de régulation de température (105) sont couplées,
dans laquelle la plaque de commande (401) est disposée sur un côté du corps de régulation de température (103) opposé à la platine (101),
dans laquelle la plaque de commande (401) est disposée de manière mobile par rapport au corps de régulation de température (103) de façon à ce que la plaque de commande (401) déplace les tiges de régulation de température (105) à travers les perçages de logement (104) du corps de régulation de température (103),
dans laquelle la plaque de commande (401) comprend plus particulièrement des perçages de logement, dans lesquels les tiges de régulation de température (105) sont logés de manière coulissante,
dans laquelle les tiges de régulation de température (105) comprennent chacune une tête de tige qui présente un diamètre supérieur à celui du perçage correspondant, dans lequel la tige de régulation de température (105) correspondante est insérée,
dans laquelle les tiges de régulation de température (105) sont insérées dans les perçages de logement correspondants de façon à ce qu'une chute en direction des corps de régulation de température (103) soit bloqué au moyen des têtes de tiges,
dans laquelle la plaque de commande (401) peut être déplacée, plus particulièrement de manière distante par rapport au corps de régulation de température (103), de façon à ce que, entre la plaque de commande (401) et le corps de régulation de température (103), un espace intermédiaire (402) soit formé, dans lequel se trouvent au moins une partie des tiges de régulation de température (105),
dans laquelle, dans l'espace intermédiaire (402), un fluide de régulation de température peut être introduit pour la régulation de la température de la partie des tiges de régulation de température (105).

9. Unité de régulation de température selon l'une des revendications 1 à 8, comprenant en outre un élément isolant (601) pour l'isolation thermique du corps de régulation de température (103) par rapport à la platine (101),
dans laquelle l'élément isolant (601) est disposé sur le corps de régulation de température (103) de façon à ce qu'une zone du corps de régulation de température (103), à partir de laquelle les tiges de régulation de température (105) du groupe de régulation de température (106) peuvent être déplacés hors du corps de régulation de température en direction de la platine (101), reste dégagée de l'élément isolant (601) ou à ce que les tiges de régulation de température se déplacent à travers des perçages dans le matériau isolant,
dans laquelle, plus particulièrement l'élément isolant (601) est disposé sur le corps de régulation de température (103) de façon à ce que l'élément isolant (601) recouvre les perçages de logement (104) du corps de régulation de température (103), dans lesquels se trouvent les tiges de régulation de température (105), qui ne font pas partie du groupe de régulation de température (106) de tiges de régulation de température (105), afin de bloquer un déplacement des tiges de régulation de température (105) correspondantes en direction de la platine (101).

10. Unité de régulation de température selon l'une des revendications 1 à 9, comprenant en outre
un gabarit de commande
dans laquelle le gabarit de commande comprend un motif prédéterminé d'ouvertures de passage pour les tiges de régulation de température (105) du groupe de régulation de température (106),
dans laquelle le motif d'ouvertures de passage indique la zone de régulation de température de la platine (101),
dans laquelle le gabarit de commande est disposé avec une orientation prédéterminée sur le corps de régulation de température (103) de façon à ce que, sur la base du motif d'ouvertures de passage, seules les tiges de régulation de température (105) du groupe de régulation de température (106) peuvent traverser les ouvertures de passage du gabarit de commande ainsi que les perçages de logement (104) du corps de régulation de température (103), afin d'établir le contact thermique entre les tiges de régulation de température (105) du groupe de régulation de température (106) avec la zone de régulation de température de la platine (101),
dans laquelle le gabarit de commande peut être disposé plus particulièrement de manière interchangeable sur le corps de régulation de température (103),
dans laquelle, plus particulièrement, le corps de régulation de température (103) comprend deux barres de guidage opposées, entre lesquelles le gabarit de commande peut être inséré et fixé à la manière d'un tiroir,
dans laquelle, plus particulièrement, le corps de régulation de température (103) comprend une cavité interne dans laquelle le gabarit de commande peut être inséré et fixé.

11. Unité de régulation de température selon l'une des revendications 1 à 10, comprenant en outre
un mécanisme de commande (107) qui est couplé avec le corps de régulation de température (103) de façon à ce que seules les tiges de régulation de température (105) du groupe de régulation de température (106) puissent être déplacées hors du corps de régulation de température (103) en direction de la platine (101),
dans laquelle, plus particulièrement, le mécanisme de commande (107) comprend un mécanisme magnétique qui est conçu pour générer un champ magnétique qui correspond de manière indicative à la forme de la zone de régulation de température de la platine (101),
dans laquelle le mécanisme magnétique est couplé avec le corps de régulation de température (103) de façon à ce que, grâce au champ magnétique, seul le groupe de régulation de température (106) de tiges de régulation de température (105) puisse être déplacé hors du corps de régulation de température (103) en direction de la platine (101),
dans laquelle, plus particulièrement, le corps de régulation de température (103) peut être disposé de façon à ce que les tiges de régulation de température (105) puissent être sorties par la force de gravité en direction de la platine (101).
dans laquelle le champ magnétique est conçu de façon à ce qu'une force de retenue magnétique puisse être exercée sur les tiges de régulation de température (105) qui ne font pas partie du groupe de régulation de température (106), de façon à ce que seules les tiges de régulation de température (105) du groupe de régulation de température (106) puissent être sorties.

12. Unité de régulation de température selon la revendication 11, comprenant en outre une pluralité de ressorts de rappel (108), qui sont conçus de façon à ce qu'un ressort de rappel (108) corresponde à une tige de régulation de température (105) et soit couplé à celle-ci de façon à ce que la tige de régulation de température (105) correspondante puisse être fixée au moyen du ressort de rappel (108) dans une position éloignée de la platine (101).

13. Unité de régulation de température selon la revendication 11 ou 12, comprenant en outre
une unité de commande (111),
dans laquelle l'unité de commande (111) est conçue pour obtenir des données de position de la platine (101),
dans laquelle l'unité de commande (111) est en outre conçue pour sélectionner, sur la base des données de position, les tiges de régulation de température (105) du groupe de régulation de température (106), afin de générer, sur la base d'une position actuelle de la platine (101), la zone de régulation de température de la platine (101).

14. Système de régulation de température pour la régulation de température d'une zone de régulation de température de la platine (101), dans lequel le système de régulation de température comprend
au moins deux unités de régulation de température selon l'une des revendications 1 à 13, dans lesquelles les au moins deux unités de régulation de température peuvent être fixées entre elles de manière amovible.

15. Procédé de fonctionnement d'une unité de régulation de température pour un dispositif de four (100) pour le traitement thermique d'une platine (101), plus particulièrement d'une platine métallique (101), ce procédé comprenant
le contrôle de tiges de régulation de température (105) de façon à ce qu'un groupe de régulation de température (106) de tiges de régulation de température (105) soit déplacé hors d'un corps de régulation de température (103) en direction de la platine (101) vers une deuxième position, afin de pouvoir établir un contact thermique entre le groupe de régulation de température (106) de tiges de régulation de température (105) avec une zone de régulation de température prédéterminée de la platine (101),
dans lequel le corps de régulation de température (103) est contact thermique avec les tiges de régulation de température (105), de façon à ce que celles-ci puissent être ajustées à une température au moyen du corps de régulation de température (103), dans lequel le corps de régulation de température (103) peut être disposé dans un espace de four (113) du dispositif de four (100),
dans lequel le corps de régulation de température (103) comprend une pluralité de perçages de logement (104),
dans lequel les tiges de régulation de température (105) sont logées de manière mobile par rapport au corps de régulation de température dans les perçages de logement (104) et peuvent être déplacées entre une première position, dans laquelle les tiges de régulation de température (105) sont distantes de la platine, et une deuxième position, dans laquelle les tiges de régulation de température (105) sont en contact thermique avec la platine,
dans lequel le corps de régulation de température (103) est en contact thermique avec les tiges de régulation de température (105), de façon à ce que celles-ci puissent être ajustées à une température au moyen du corps de régulation de température (103) et en ce que les tiges de régulation de température (105) qui ne font pas partie du groupe de régulation de température (106) restent dans la première position.
